(19) Europäisches Patentamt

European Patent Office

Office européen des brevets

(11) **EP 0 420 990 B1**

## (12) EUROPEAN PATENT SPECIFICATION

(45) Date of publication and mention
of the grant of the patent:
**13.03.1996 Bulletin 1996/11**

(21) Application number: **90905652.5**

(22) Date of filing: **07.04.1990**

(51) Int. Cl.⁶: **B23Q 35/123**

(86) International application number: **PCT/JP90/00478**

(87) International publication number:
**WO 90/11869 (18.10.1990 Gazette 1990/24)**

(54) **PROFILE CONTROL DEVICE**

KOPIERSTEUERGERÄT

DISPOSITIF DE COMMANDE DE COPIAGE

(84) Designated Contracting States:
**DE GB IT**

(30) Priority: **12.04.1989 JP 92752/89**

(43) Date of publication of application:
**10.04.1991 Bulletin 1991/15**

(73) Proprietor: **FANUC LTD.**
**Minamitsuru-gun, Yamanashi 401-05 (JP)**

(72) Inventors:
 • **MATSUURA, Hitoshi**
 **Hachioji-shi Tokyo 193 (JP)**

 • **ARAMAKI, Hitoshi**
 **Tokyo 191 (JP)**

(74) Representative: **Brunner, Michael John et al**
**GILL JENNINGS & EVERY**
**Broadgate House**
**7 Eldon Street**
**London EC2M 7LH (GB)**

(56) References cited:
 **EP-A- 0 214 548       JP-A- 1 164 542**
 **JP-A- 6 244 362       JP-A-57 211 455**
 **JP-A-59 192 445       JP-A-63 214 810**

EP 0 420 990 B1

## Description

### Technical Field

The present invention relates to a tracing control system for machining a workpiece to a desired contour corresponding to the surface of a model which is being traced, and more particularly to a tracing control system for machining a workpiece to a contour according to the traced shape of a model at high speed and with high precision based on on-line data processing.

### Background Art

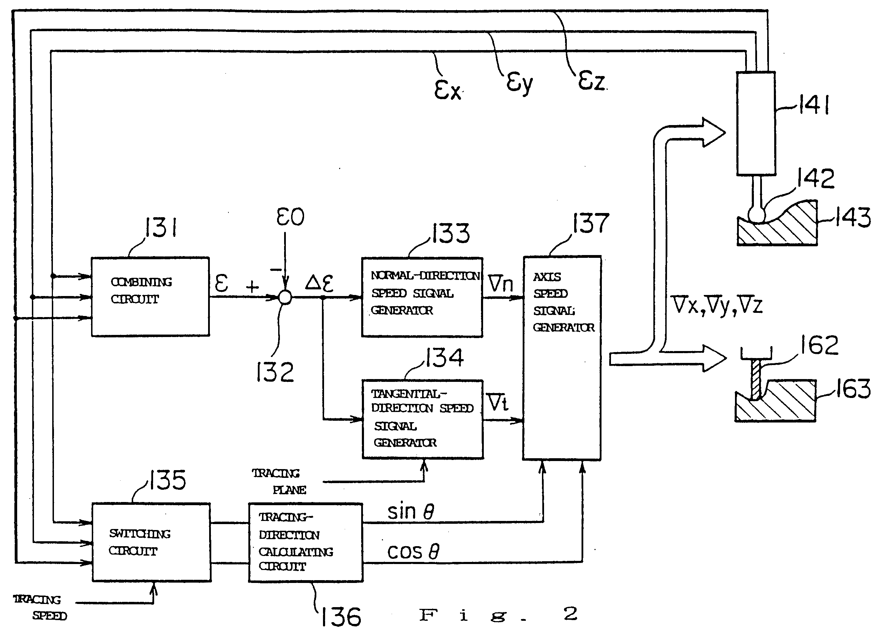

FIG. 2 of the accompanying drawings shows the concept of a conventional tracing control system. A stylus 142 is held in contact with a model 143 to be copied. Amounts $\varepsilon x$, $\varepsilon y$, $\varepsilon z$ of displacement of the stylus 142 along respective axes are detected by a tracer head 141. A combined amount

$$\varepsilon \ (\varepsilon = \sqrt{\varepsilon x^2 + \varepsilon y^2 + \varepsilon z^2})$$

of displacement of the stylus 142 is calculated by a combining circuit 131. An adder 132 then calculates the difference $\triangle\varepsilon$ between the combined amount $\varepsilon$ of displacement a reference amount $\varepsilon 0$ of displacement. A normal-direction speed signal generator 133 produces a normal-direction speed signal Vn by multiplying the difference $\triangle\varepsilon$ by a predetermined gain. A tangential-direction speed signal generator 134 generates a tangential-direction speed Vt from the difference $\triangle\varepsilon$ and a commanded tracing speed.

A switching circuit 135 selects amounts of displacement along the respective axes in a commanded tracing plane. A tracing-direction calculating circuit 136 employs the selected amounts to calculate a cosine cos $\theta$ and a sine sin $\theta$ of a profiling direction $\theta$. An axis speed signal generator 137 employs Vn, Vt, cos $\theta$, and sin $\theta$ to generate axis speed signals Vx, Vy, Vz for the respective tracing axes. Based on the axis speed signals, the stylus 142 is moved on the surface of the model 143. A cutter head 162 is also moved at the same speed as the stylus 142 to machining a workpiece 163.

In the conventional tracing control system, however, there is a certain limitation on tracing speeds. If the tracing speed is excessively high, the cutter head 162 tends to bite into the workpiece 163 in regions where the shape to be copied abruptly changes.

There has been developed a digitizer as a means for solving the above problem. The digitizer reads digital positional data of the positions of the controlled axes from time to time. The digitizer linearly approximates the model surface based on the positional data, and also processes data to prevent the cutter head from biting into the workpiece, such as by temporarily interrupting the reading of positional data in the regions where the shape to be copied abruptly changes, thereby generating NC data. The NC data are then supplied to a computerized numerical control system for machining the workpiece.

The process which employs the digitizer, however, requires an increased number of steps and is not efficient since the model is traced and then the workpiece is machined.

EP-A-0214584 discloses a machining apparatus with force dependent workpiece displacement control. JP-A-59192445 discloses a training apparatus with NC encoding. JP-A-6244362 discloses a master/slave tracer controller which converts cutter travel into serial data.

The present invention has been made in view of the aforesaid drawbacks. It is an object of the present invention to provide a tracing control system for machining a workpiece to a contour according to the traced shape of a model at high speed and with high precision based on on-line data processing.

To achieve the above object, there is provided in accordance with the present invention a tracing control system for machining a workpiece to a desired contour corresponding to the surface of a model which is being traced, comprising:

a tracing control circuit for controlling a plurality of tracing axes to trace the surface of the model; and

numerical control circuits for positionally controlling as many machining axes as the number of said tracing axes based on NC data; characterised by:

a digitizing circuit connected to said tracing control circuit through a bus, for reading the positions of said tracing axes as positional data from time to time and processing the positional data to prevent a cutter head from biting into the workpiece, thereby to generate the NC data which linearly approximates the surface of the model; and

the numerical control circuits being connected to the digitising circuit through the bus.

The tracing control circuit, the digitizing circuit, and the numerical control circuits are functionally coupled to each other through the single bus. While the model to be copied is being traced under the control of the tracing control circuit, the NC data are generated by the digitizing circuit with unwanted data eliminated, and the numerical circuits control the machining axes in position according to the NC data.

In the drawings:

Fig. 1 is a block diagram showing the hardware arrangement of a tracing control system according to an embodiment of the present invention; and
Fig. 2 is a diagram showing the concept of a conventional tracing control system.

### Best Mode for Carrying Out the Invention

An embodiment of the present invention will hereinafter be described with reference to the drawings.

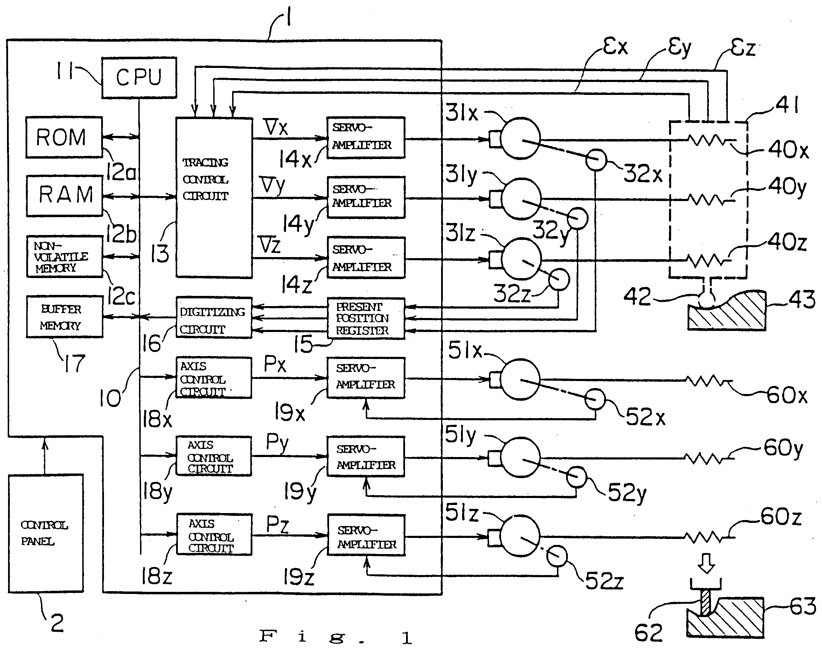

FIG. 1 is a block diagram showing the hardware arrangement of a tracing control system according to an embodiment of the present invention. In FIG. 1, a processor 11 reads a system program stored in a ROM 12a through a bus 10, and controls the overall operation of a tracing control system 1 according to the system program. A RAM 12b comprises a DRAM for temporarily storing calculated data and display data. A nonvolatile memory 12c is backed up by a battery (not shown), and stores various parameters required by tracing control, digitizing, and numerical control. These parameters are entered from a control panel 2.

A tracing control circuit 13 is supplied with amounts $\varepsilon x$, $\varepsilon y$, $\varepsilon z$ of displacement along respective axes of a stylus 42, and also with a tracing plane, a tracing speed, etc., from the processor 11 through the bus 10, for generating speed signals Vx, Vy, Vz for respective tracing axes 40x, 40y, 40z according to the known process. Servoamplifiers 14x, 14y, 14z amplify the speed signals Vx, Vy, Vz and energize servomotors 31x, 31y, 31z mounted on a tracing machine with the amplified speed signals, thereby moving a tracer head 41 along the surface of a model 43 for carrying out a tracing control process.

Pulse coders 32x, 32y, 32z generate pulse signals each time the servomotors 31x, 31y, 31z rotate through a predetermined angle. A present position register 15 in the tracing control system 1 reversibly counts the pulse signals from the pulse coders 32x, 32y, 32z, thereby to store the present positions of the tracing axes 40x, 40y, 40z, and supplies the stored present positions as positional data to a digitizing circuit 16.

The digitizing circuit 16 reads the positional data at predetermined time intervals or when a variation in the positional data exceeds a predetermined tolerable value, and generates NC data which linearly approximate the configuration of the model 43. The digitizing circuit 16 corrects an error of a path due to displacement of the stylus 41 when the NC data are generated. If the positional data vary in excess of a predetermined value, then the digitizing circuit 16 regards such a variation in the positional data as indicating an abrupt shape-changing region, and temporarily interrupts the reading of the positional data. Moreover, the digitizing circuit 16 is responsive to commands for scaling the positional data at a given magnification ratio, converting the unit of the positional data, and rotating the coordinates of the positional data. The NC data thus produced by the digitizing circuit 16 are stored into a buffer memory 17 through the bus 10.

The processor 11 successively reads the NC data stored in the buffer memory 17, and applies the NC data as movement commands for machining axes 60x, 60y, 60z to axis control circuits 18x, 18y, 18z through the bus 10. The axis control circuits 18x, 18y, 18z convert the applied NC data into position command signals Px, Py, Pz, which are applied to respective servoamplifiers 19x, 19y, 19z. The servoamplifiers 19x, 19y, 19z amplify the position command signals Px, Py, Pz to energize respective servomotors 51x, 51y, 51z.

The servomotors 51x, 51y, 51z have built-in position-detecting pulse coders 52x, 52y, 52z which feed positional signals as pulse trains back to the servoamplifiers 19x, 19y, 19z. Although not shown, the servoamplifiers 19x, 19y, 19z convert the pulse trains into speeds through F/V (frequency/speed) conversion, thereby generating speed signals. Therefore, the speed feedback control as well as the position feedback control are effected.

As a consequence, the cutter head 62 moves according to the NC data to machine the workpiece 63 to a contour according to the shape of the model 43 as it is or at a given magnification ratio.

While the tracer head is employed to effect a tracing process in the above description, a non-contact-type distance sensor may be employed in place of the tracer head.

In the above embodiment, the three control axes are provided for each of the tracing and machining processes. However, the present invention may be carried out with another number of axes.

With the present invention, as described above, while the model to be copied is being traced under the control of the tracing control circuit, the NC data are generated by the digitizing circuit with unwanted data eliminated, and the numerical control circuits control the machining axes in position according to the NC data. Therefore, the cutter head is prevented from biting into the workpiece, resulting in an increased degree of machining accuracy. In addition to tracing machining according to the shape of the model, various forms of data processing such as scaling, coordinate rotation, and the like can be carried out by the tracing control system. The tracing control system can therefore be used in an increased range of machining applications.

Since the tracing control circuit, the digitizing circuit, and the numerical control circuits are coupled to each other through the single bus, the tracing control system is smaller in size, less wasteful of functions, and more economic than would be if a plurality of independent functional devices were coupled together externally.

**Claims**

1. A tracing control system (1) for machining a workpiece (63) to a desired contour corresponding to the surface of a model (43) which is being traced, comprising:

   a tracing control circuit (13) for controlling a plurality of tracing axes to trace the surface of the model; and

   numerical control circuits (11,18,18x, 18y,18z) for positionally controlling as many machining axes as the number of said tracing axes based on NC data; characterised by:

   a digitising circuit (16) connected to said tracing control circuit (13) through a bus (10), for reading the positions of said tracing axes as positional data from time to time and processing the positional data to prevent a cutter head (62) from biting into the workpiece (63), thereby to generate the NC data which linearly approximates the surface of the model (63); and

the numerical control circuits being connected to the digitising circuit through the bus.

2. A tracing control system (1) according to claim 1, wherein said digitizing circuit (16) includes means for processing the positional data according to at least one of a process of correcting an error of a path due to displacement of a stylus (42) which traces the surface of the model (43), a process of scaling said positional data at a predetermined magnification ratio, a process of converting the unit of said positional data, and a process of rotating the coordinates of said positional data.

**Patentansprüche**

1. Abtaststeuersystem (1) zum Bearbeiten eines Werkstücks (63) in einer gewünschten Kontur entsprechend der Oberfläche eines Modells (43), das abgetastet wird, mit: einer Abtaststeuerschaltung (13) zum Steuern mehrerer Abtastachsen zum Abtasten der Modelloberfläche und numerischen Steuerschaltungen (11,18,18x,18y,18z) zur Positionssteuerung einer der Zahl der Abtastachsen entsprechenden Zahl von Bearbeitungsachsen basierend auf NC-Daten, gekennzeichnet durch: einer digitalisierenden Schaltung (16), die an die Abtaststeuerschaltung (13) über einen Bus (10) angeschlossen ist, um die Positionen der Abtastachsen als Positionsdaten von Zeit zu Zeit zu lesen und die Positionsdaten zu verarbeiten, um das Festbeißen eines Fräskopfes (62) im Werkstück (63) zu vermeiden, und dadurch NC-Daten zu erzeugen, die eine lineare Annäherung an die Oberfläche des Modells (63) darstellen und die numerischen Steuerschaltungen sind an die digitalisierende Schaltung über den Bus angeschlossen.

2. Abtaststeuersystem 1 nach Anspruch 1, bei dem die digitalisierende Schaltung (16) Mittel zum Verarbeiten der Positionsdaten gemäß mindestens einem Verfahren zur Korrektur eines Bahnfehlers infolge einer Verschiebung des die Oberfläche des Modells (43) abtastenden Tasters (42) aufweist, sowie einen Prozeß der Maßstabsänderung der Positionsdaten mit einem bestimmten Vergrößerungsverhältnis, einem Prozeß zum Konvertieren der Einheit der Positionsdaten und einem Prozeß zur Koordinatendrehung der Positionsdaten.

**Revendications**

1. Un dispositif de commande de suivi (1) pour usiner une pièce d'ouvrage (63) à un contour désiré correspondant à la surface d'un modèle (43) à suivre, comprenant : un circuit de commande de suivi (13) pour commander un ensemble d'axes de suivi afin de suivre la surface du modèle ; et des circuits à commande numérique (11, 18, 18x, 18y, 18z) pour commander en position autant d'axes d'usinage que le nombre desdits axes de suivi sur la base de données de commande numériques ; caractérisé par : un circuit de numérisation (16) relié audit circuit de commande de suivi (13) par l'intermédiaire d'un bus (10), afin de lire les positions desdits axes de suivi en tant que données de position de temps à autre et de traiter les données de position afin d'éviter que la tête d'un organe de coupe (62) ne vienne mordre dans la pièce d'ouvrage (63), de manière ainsi à produire les données de commande numérique qui approchent de manière linéaire la surface du modèle (63) ; et les circuits de commande numérique étant reliés au circuit de numérisation par l'intermédiaire du bus.

2. Un circuit de commande de suivi (1) selon la revendication 1, dans lequel ledit circuit de numérisation (16) comprend des moyens pour traiter les données de position selon au moins un procédé parmi un procédé de correction d'une erreur d'un trajet dû au déplacement d'une pointe (42) qui suit la surface du modèle (43), un procédé de mise à l'échelle desdites données de position à un rapport d'agrandissement prédéterminé, un procédé de conversion de l'unité desdites données de position, et un procédé de rotation des coordonnées desdites données de position.

Fig. 1

Fig. 2